# EUROPEAN PATENT APPLICATION

(11) **EP 1 081 625 A2**
(43) Date of publication of application: **07.03.2001**
(21) Application number: 00660145.4
(22) Date of filing: 30.08.2000
(51) Int. Cl.: G06F 17/60

(54) **Travel planner system for providing travel information and updates over a mobile network**

(30) Priority: 31.08.1999 US 387051
(71) Applicant: Nokia Corporation, 02150 Espoo (FI)
(72) Inventor: Granberg, Martti, 00100 Helsinki (FI)
(74) Representative: Johansson, Folke Anders

(57) **Abstract**

A travel information update system is provided for providing handling update requests of a travel plan from mobile phone subscriber over a mobile network. Such a travel information update system comprises an update travel information service provider (100) electronically linked to provide update information of a travel plan of a designated subscriber; and a mobile network comprising a mobile switching center (200) which processes requests for service between the update travel information service provider and the designated subscriber; a plurality of base stations (210) located in different coverage areas of different sites which receive through respective antennas said update information of the travel plan of the designated subscriber from the mobile switching center; and at least one mobile unit (214) located within the coverage area of a relevant site which receives update information of the travel plan for the designated subscriber.

## Description

The present invention relates to a computerized system for providing travel information and handling remote requests for changes and updates of travel information, and more particularly, relates to a computerized travel planner system for allowing travelers to make travel reservations from travel agents, obtain travel information, request changes to the travel information including flight plans and/or receive updates of such flight plans from airlines regarding flight schedules, via mobile telephones over a mobile network.

Generally, most travel arrangements are handled via telephone connection to either travel agencies, in-house travel departments, or directly with travel-related service providers such as airlines, hotels, auto rental agencies, etc. Computerized travel reservation systems are typically used to provide customers (e.g, travel agents or travelers) with information pertaining the availability of commercial airline flights, fares and rules of a particular travel venue, and the availability and rates of specific hotel accommodations and/or automobile rentals and related services. Either the travel agent or the traveler is required to book and confirm reservation of selected travel arrangement, including airline flights, hotel accommodations and, if necessary, automobile rentals for a specific venue and other information pertinent to the travel arrangement. A proposed travel itinerary in combination with fare that is acceptable to the designated traveler in terms of costs and convenience is then provided to the travel agent or directly to the traveler, via mail or personal computer (PC). Payment in a form of a credit card debit slip or a deposit record attached to the customer's check may then be prepared by the travel agent and transmitted to the banking institution for payment.

When a travel itinerary for a specified venue is obtained from the travel agent using the computerized travel reservation system, any subsequent change to the travel itinerary may be difficult. Usually, the traveler must call either the travel agency or the reserved airline, hotel and/or rental agency directly, and request for changes to the travel itinerary. The travel agent must access the computerized travel reservation system, re-organize the travel itinerary and prepare a new itinerary. Similarly, if changes are necessitated from the reserved airline, hotel and/or auto rental agency due to unexpected circumstances, such as flight delay or last minute cancellation, the traveler must still call the travel agency or directly to different travel-related service provider such as, airline, hotel and/or auto rental agency reserved to obtain updated travel information of the travel itinerary. While the traveler can always call the travel agency or the different travel-related service provider to obtain such updated travel information, such required communication can be burdensome and inefficient, particularly when the traveler is on the road or is waiting for connection flight where communication devices may not be readily available. Accordingly, there is a need for a computerized travel planner system which allows an individual travel to book travel reservations, obtain a travel itinerary, and/or to timely, efficiently and effectively obtain update travel information of such a travel itinerary over a mobile network.

Accordingly, various embodiments of the present invention are directed to a computerized travel planner system for allowing travelers to make travel reservations from travel agents, obtain travel information, request changes to the travel information including flight plans and/or receive updates of such flight plans from airlines regarding flight schedules, via mobile telephones over a mobile network.

In accordance with the present invention, a computerized travel information update system comprises an update travel information service provider electronically linked to provide update information of a travel itinerary of a designated subscriber over a mobile network; and a mobile unit electronically linked to the mobile network to receive the update information of the travel itinerary of the designated subscriber over the mobile network.

The mobile network may be a public land mobile network (PLMN) such as a Global System for Mobile Communications (GSM) network which comprises a mobile switching center for processing requests for service between the update travel information service provider and the designated subscriber; and a plurality of base stations located in different coverage areas of different sites for receiving through respective antennas the update information of the travel itinerary of the designated subscriber from the mobile switching center to the mobile unit located within the coverage area of the respective site.

The mobile switching center may comprise a plurality of controllers which coordinate operations of the base stations, switching functions, network interconnections, and communication links with the base stations; a switching assembly which uses time slot interchange technology to provide connections between base stations channels and network channels through the use of temporary memory locations; communication links which support transportation of the update information of the travel itinerary between the update travel information service provider and the base stations; and subscriber database including a home location register (HLR) which stores and processes subscriber lists, holds temporary subscriber information, and stores and forwards update information of the travel itinerary.

In accordance with one aspect of the present invention, the update travel information service provider may be implemented with short message service (SMS) to provide update information of the travel itinerary of the designated subscriber over the mobile network. Such an update travel information service provider may comprise a short message service center electronically linked to receive short messages in digital form indicating update information of the travel itinerary of the designated traveler; and a short message terminal connected to the short message service center by a data communication line to transport the short messages in digital form indicating update information of the travel itinerary over the mobile network.

The short message service center may comprise a service unit which provides short message service (SMS); a plurality of communication units which communicate via a data network with the short message terminal and the mobile switching center; and an operating and maintenance unit which provides operation and maintenance of the entire service station.

The designated subscriber may be provided with the short message service (SMS) message indicating update information of the travel itinerary upon initial power-on registration of the mobile unit, or when the designated subscriber requests to review update information of the travel itinerary by entering a designated code through the mobile unit. When the mobile unit is initially power-on, a request for update information of the travel itinerary is automatically transmitted to the mobile switching center. The validity of such a request is determined for short message service (SMS). When such a request is validated for short message service (SMS), transmitting the short message service (SMS) message indicating update information of the travel itinerary from the mobile switching center to the mobile unit. Subsequently, the short message service (SMS) message indicating update information of the travel itinerary is relayed to the designated subscriber.

Likewise, when the designated subscriber requests to review update information of the travel itinerary by entering a designated code through the mobile unit, a request for update information of the travel itinerary is automatically transmitted to the mobile switching center. The validity of such a request is then determined for short message service (SMS). When such a request is validated for short message service (SMS), transmitting the short message service (SMS) message indicating update information of the travel itinerary from the mobile switching center to the mobile unit. Subsequently, the short message service (SMS) message indicating update information of the travel itinerary is relayed to the designated subscriber.

In accordance with another aspect of the present invention, the update travel information service provider may be implemented with either circuit switched data service or packet switched data service to provide update information of the travel plan of the designated subscriber over the mobile network.

The present invention is more specifically described in the following paragraphs by reference to the drawings attached only by way of example.

A more complete appreciation of the present invention, and many of the attendant advantages thereof, will become readily apparent as the same becomes better understood by reference to the following detailed description when considered in conjunction with the accompanying drawings in which like reference symbols indicate the same or similar components, wherein:
FIG. 1 is a top level block diagram of a travel planner system according to the principles of the present invention;
FIGs. 2A and 2B are example flowcharts of a step-by-step operation of the computerized travel planner system shown in FIG. 1;
FIG. 3 illustrates an example travel itinerary obtained from the travel planner system shown in FIG. 1;
FIG. 4 illustrates a mobile network for providing updates of the travel itinerary from a computerized travel planner system according to the principles of the present invention;
FIG. 5 illustrates a block diagram of an example mobile switching center (MSC) of a mobile network shown in FIG. 4;
FIG. 6 illustrates a block diagram of an example base station (BS) of a mobile network shown in FIG. 4;
FIGs. 7A-7D illustrate example mobile units (MU) of a mobile network shown in FIG. 4;
FIG. 8 illustrates an example implementation of an update travel information service provider for providing updates of the travel itinerary through a mobile network shown in FIG. 4;
FIG. 9 illustrates a block diagram of an example short message service center (SMS-C) for providing updates of the travel itinerary through a mobile network shown in FIG. 4;
FIG. 10 illustrates an example short message flow diagram between a mobile unit, a mobile switching center (MSC) and a home location register (HLR) upon initial registration of the subscriber;
FIG. 11 illustrates an example short message flow diagram between a mobile unit, a mobile switching center (MSC) and a home location register (HLR) when a subscriber enters a feature code requesting the short message service (SMS);
FIG. 12 illustrates another example implementation of an update travel information service provider for providing updates of the travel itinerary through a mobile network shown in FIG. 4; and
FIG. 13 illustrates another mobile network for providing updates of the travel itinerary according to the principles of the present invention.

The present invention is applicable for use with all types of telephone and data networks, and communication services. However, for the sake of simplicity, discussions will concentrate mainly on a Public Land Mobile Network (PLMN) such as a Global System for Mobile Communications (GSM) network using one or more short message service (SMS), circuit switched data service and packet switched data service, although the scope and implementation of the present invention is not limited thereto.

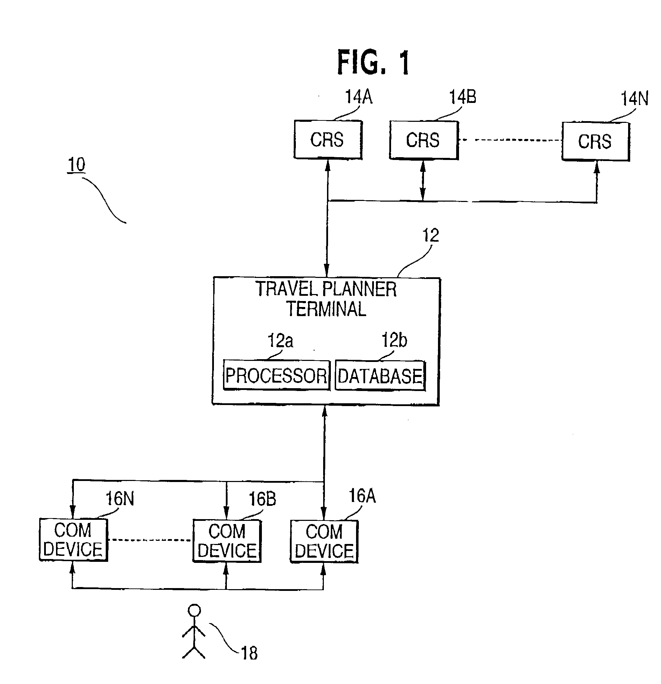

Attention now is directed to the drawings and particularly to FIG. 1, which provides a top level block diagram of a computerized travel planner system 10 according to the principles of the present invention. The travel planner system 10 may comprise a travel planner terminal 12, a plurality of computer reservation systems (CRS) 14A-14N, a plurality of communication devices (subsystems) 16A-16N, and one or more travel agency customers 18. A travel planner terminal 12 may preferably be used to provide customer travel services, by one or more travel agents employed by a travel agency, for example. A plurality of computer reservation systems (CRS) 14A-14N can be electronically linked with the travel planner terminal 12 via a communication processor or interface (not shown) to provide travel service inventory information, such as airline flight, rail, hotel, limousine, and auto rental availability and rates. Each computer reservation system 14 may be one or more commercially available computer reservation systems for airline flights such as, for example, the SABRE, Worldspan®, Apollo®, or System One® systems, and for different hotel accommodations and auto rental reservations.

One or more travel subscribers (e.g., travelers or terminal users) 18 can communicate with one or more travel agents using any one of a number of communication devices 16A-16N via telephone lines, either through a public switch telephone network (PSTN), a local area network (LAN), or alternatively, through a wide area network (WAN) or an information network provided by the sponsoring travel agency. Each communication device may be a telephone system, a facsimile system, or a personal computer (PC). Travel service request information from a designated subscriber (traveler) may preferably be input as data to the travel planner terminal 12, by a travel agent.

The travel planner terminal 12 may include a main processor 12a and a database 12b which are communication with a plurality of computer reservation systems (CRS) 14A-14N. The processor 12a may be programmed to selected an individual travel itinerary (or group of designated travelers) including airline flights, hotel accommodations and auto rental reservations with best rate combinations for a specific venue in response to the individual travel request data entered on terminal 12. In addition, the main processor 12a may also be programmed to provide a visual display of the selected flights, hotel accommodations and ground transportation services via a display means of the terminal 12. When appropriate airline flights, hotel accommodations and/or ground transportation services are selected, the selected travel itinerary may be booked through one of the plurality of computer reservation systems (CRS) 14A-14N. If an airline ticket is required, for example, an invoice and travel itinerary, and an airline ticket may be printed, via a printer (not shown).

Alternatively, the travel service request information from the designated subscriber (traveler) may also interact directly with the computer reservation systems (CRS) 14A-14N by using a personal computer (PC) with a modem and suitable communication software so that the individual customer may access the computer reservation systems (CRS) 14A-14N via telephone lines, either through the PSTN, LAN, WAN or other information network such as Internet for booking travel reservations. For example, travel information of the travel planer terminal 12 may be downloaded through the Internet connection by dialing the Internet Service Provider (ISP) for connecting to the travel planner terminal 12.

In a preferred embodiment, a designated subscriber may belong to a predetermined group within an entity and has predetermined preferences relating to different classes or levels of services available for grading the travel conditions. For example, the designated subscriber may be listed as a member of an executive group of a designated company who has set preferences of traveling on 1^{st} class airlines, hotel accommodations and/or ground transportation services. An administrator of the designated company may communicate with the travel agent on behalf of the designated subscriber to inform the travel agent the grading of travel conditions of the designated subscriber of a predetermined group.

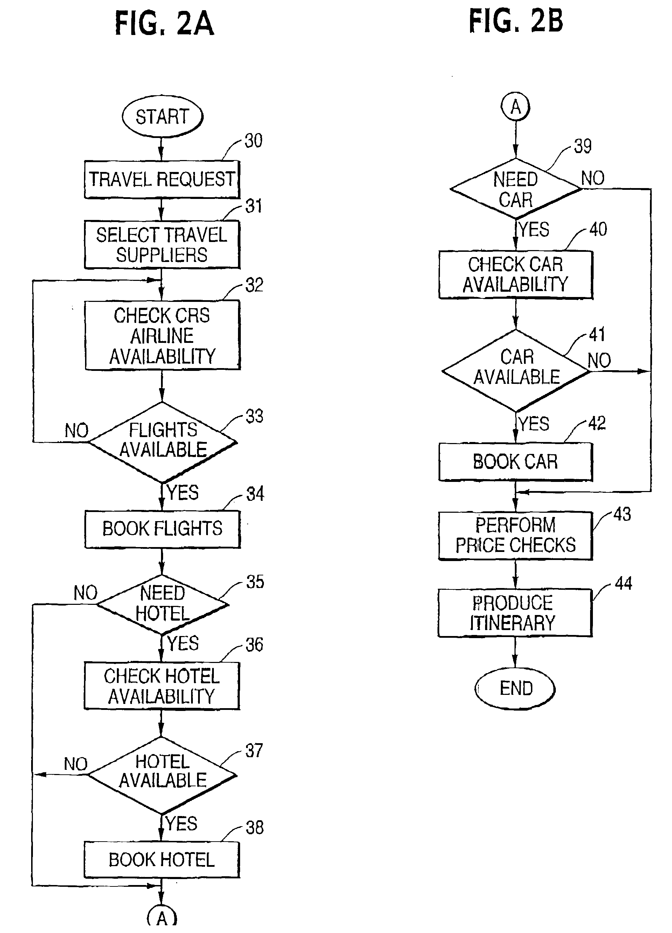

FIGs. 2A and 2B are example flowcharts of a step-by-step operation of the computerized travel planner system 10 of FIG. 1. As shown in FIG. 2A, the initial travel request data is received at block 30. Customer information is obtained and travel suppliers such as airline, hotel and transportation vendors are selected at block 31. Customer information may include classification information of a designated subscriber such as the group in which the subscriber belongs and the preferences for traveling conditions (e.g., 1^{st} class full-fare ticket). An airline availability request is issued based on the time and date of travel request (the request can be based on departure or arrival time) and the airline CRS 14A-14N is checked at block 32.

When a response is received from the airline CRS 14A-14N, the response is read and the appropriate flights are selected. If the selected flights are available at block 33, the travel planner system 10 proceeds to block 34 to send a booking request to the responding airline CRS 14A-14N. If the flights are not available, the system 10 will continue to question an airline CRS 14A-14N until an available flight is located at block 33. If available flights cannot be located from the airline CRS 14A-14N, the system may issue an error message. Airline booking information may include, for example, the traveler's name, departure and arrival dates and places, the airline carrier, payment method, currency, credit card number, and expiration date.

When appropriate flights have been selected, a determination is made whether a hotel is required at block 35. If a hotel is required, a hotel availability request is issued and sent to the hotel CRS 14A-14N for checking the hotel availability at block 36. Once a response is received from the hotel CRS 14A-14N, the response is read and, if the hotel is available at block 37, a booking request is sent to the hotel CRS 14A-14N at block 38. Similar to airline booking information, hotel booking information may include the traveler's name, departure and arrival dates and places, hotel name, number of rooms, room type, payment method, currency, credit card number, and expiration date.

If a hotel is neither required at block 35 nor is a hotel available at block 37, the system 10 proceeds to block 39 to determine whether a car is required as shown in FIG. 2B. If a car is required at block 39, a car availability request is issued and sent to the transportation CRS 14A-14N for checking the car availability at block 40. Once a response is received from the transportation CRS 14A-14N, the response is read and, if the car is available at block 41, a booking request is issued and sent to the transportation CRS 14A-14N at block 42. Transportation booking information may include, for example, the traveler's name, pickup and delivery dates and places, rental carrier, payment method, currency, credit card number, and expiration date.

If neither a car is needed at block 39 nor is a car available at block 41, the system 10 proceeds to block 43 to perform price checks for all booked items, including airline, hotel and transportation services. Once all prices quoted are confirmed, the system 10 produces a travel itinerary and/or ticket at block 44.

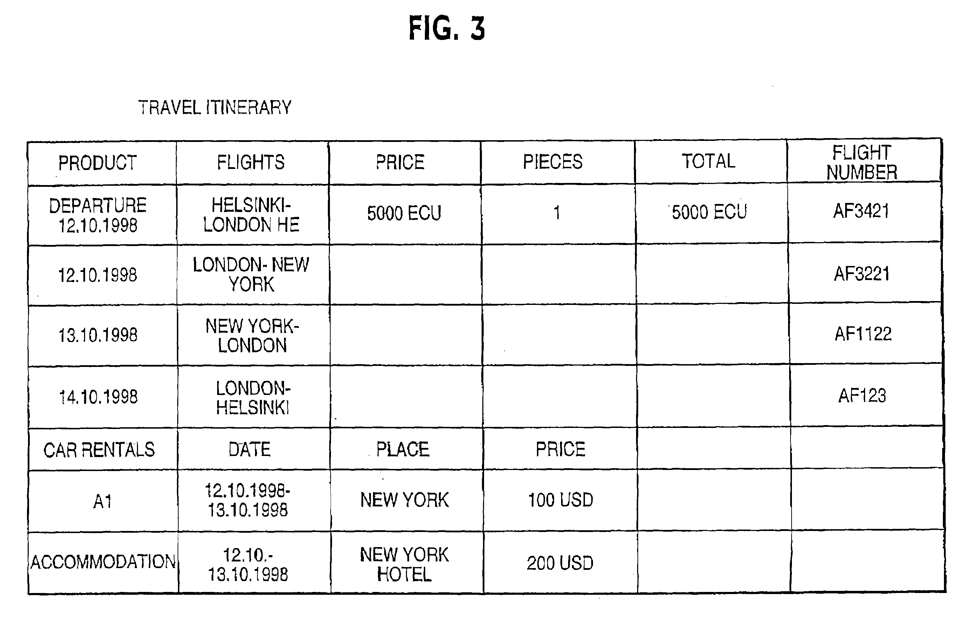

FIG. 3 illustrates an example travel itinerary obtained from the travel planner system 10 using an example step-by-step operation as described, for example, in FIGs. 2A and 2B. An example travel itinerary may include, at a minimum, specific airline flight information with flight numbers, rates, departure and arrival venues, dates and times, specific hotel accommodations and ground transportation services with rates and dates. More specifically, the travel itinerary may contain information as shown in FIG. 3 as follows:
1 ) Departure date from Helsinki to London on October 12, 1998 and flight number of AF3421, and connection flight of AF3221 from London to New York;
2) Departure date from New York to London on October 13, 1998 and flight number of AF1122, and connection flight of AF123 from London to Helsinski;
3) Total airfare of 5000 Euro-dollars;
4) Car rentals in New York from October 12 to October 13, 1998 for 100 US dollars; and
5) Hotel accommodations in New York from October 12 to October 13, 1998 for 200 US dollars/night.

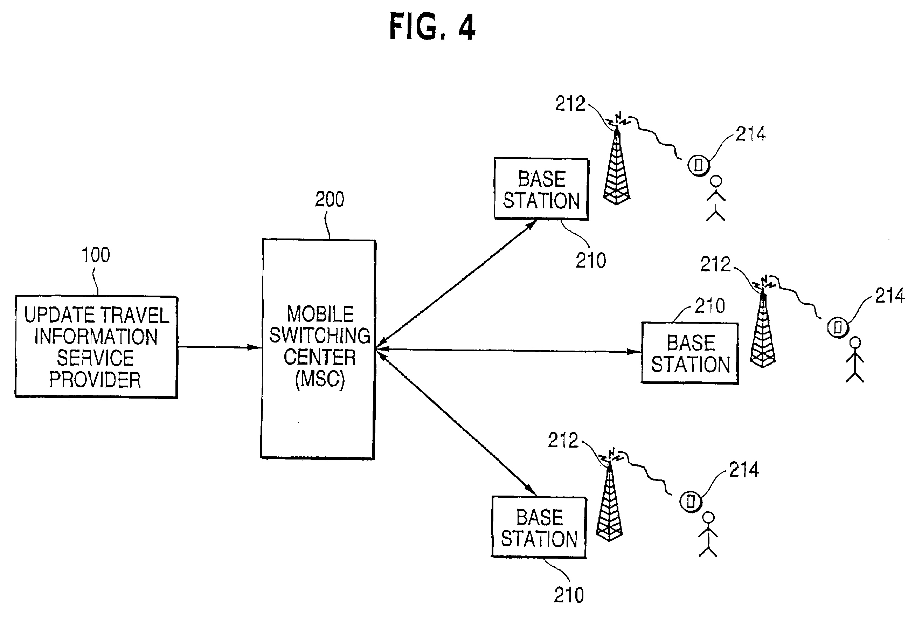

Turning now to FIG. 4, an update of travel information from the travel itinerary of a computerized travel planner system 10 using a mobile network according to the principles of the present invention is illustrated. The mobile network used may be a land-based mobile network (public land mobile network PLMN) such as a Global System for Mobile Communications (GSM) network for providing two-way communications between fixed and mobile subscribers (travelers). However, different types of analog and digital cellular networks, and personal communication service (PCS) networks may also be used for wireless communications between an update travel information service provider and a designated traveler in question.

As shown in FIG. 4, the mobile network may be divided into a mobile switching center (MSC) 200 and a plurality of base stations (BS) 210 located in different site (cell) areas which transmit and receive through respective antennas 214, voice and data information to and from mobile units 214 located within the coverage area of the respective site.

An update travel information service provider 100 may be electronically linked to the mobile switching center (MSC) 200 to handle requests from a designated traveler for changing a travel itinerary and to provide continuous or periodic updates of travel itinerary of a designated traveler either upon request from such a designated traveler via his/her mobile unit 214 and base station (BS) 212 or automatically to such a designated traveler via his/her mobile unit 214 and base station (BS) 212. In other words, the designated traveler may use his/her mobile unit 214 to provide a visual display of travel information (e.g., travel itinerary), to change travel information such as flight plans, and to receive updates of the changed travel information such as updates from airlines regarding flight schedules. Travel information may be changed, via a mobile network, if a designated traveler belongs to a predetermined group of an entity that has set preferences for high grading such as 1^{st} class flight plans.

Such an update travel information service provider 100 may be integrated into, or separated from a travel planner terminal 12 of the travel planner system 10 as shown in FIG. 1. In a preferred embodiment, the update travel information service provider 100 may be an on-line travel information system that is electronically linked to collect information such as delays or cancellation of flight schedules from a local airport authority and/or computer reservation systems for airline flights such as, for example, SABRE, Worldspan®, Apollo®, or System One® systems in order to handle and process requests to change the travel itinerary such as flight plans from a designated traveler and provide updates of such a travel itinerary such as updates from transfer providers such as airliners regarding flight schedules to the designated traveler, via the mobile network, on a continuous or periodic basis.

A designated traveler may use his/her mobile unit 214 and base station (BS) 212. In other words, the designated traveler may use his/her mobile unit 214 to provide a visual display of travel information (e.g., travel itinerary), to change travel information such as flight plans, and to receive updates of the changed travel information such as updates from airliners regarding flight schedules.

For example, if a designated traveler is scheduled to depart Helsinski to London, flight number AF3421 on October 12, 1998 as indicated by the travel itinerary shown in FIG. 3, and such a flight is delayed or canceled. The update information of the scheduled flight of the travel itinerary (e.g., information pertaining to the delayed or canceled flight) may be provided to the update travel information service provider 100 from the local airport authority and/or the travel planner system 10. Such update information of the travel itinerary may then be transmitted to the mobile switching center (MSC) 200 for relay to the base station (BS) 210. The base station (BS) 210 may then transmit the update information of the travel itinerary to the designated traveler via antenna 212 and mobile unit (MU) 214, so as to inform the designated traveler of the changes in his/her travel itinerary regardless of his/her remote location. The designated traveler may then connect to the travel planner terminal 12 of the computerized travel planner system 10 as shown in FIG. 1, and request for another scheduled flight from the same or different air carrier at the same or different time. A new travel itinerary and travel instructions may then be provided to the designated traveler at the mobile unit (MU) 214 via a visual display for confirmation and/or subsequent storage.

Similarly, if the designated traveler is scheduled to take a connection flight number AF3221 from London to New York on the next day, October 13, 1998 as indicated by the travel itinerary shown in FIG. 3, and such a flight is delayed or canceled. The update information of the travel itinerary (e.g., information pertaining to the delayed or canceled flight) may then be transmitted to the designated traveler through the mobile network of mobile switching center (MSC) 200, base station (BS) 210 and mobile unit (MU) 214. The designated traveler may then request for a different connection flight from the same or different air carrier at the same or different time. Travel instructions of different connection flights may then be provided to the designated traveler at the mobile unit (MU) 214 via a visual display for confirmation and/or subsequent storage. In both situation, travel instructions with proposed alternative flights may be provided to the designated traveler at the mobile unit (MU) 214 via a visual display for confirmation and/or subsequent storage, if an airline ticket is determined as 1^{st} class non-restricted, freely exchangeable ticket (e.g., full fare ticket).

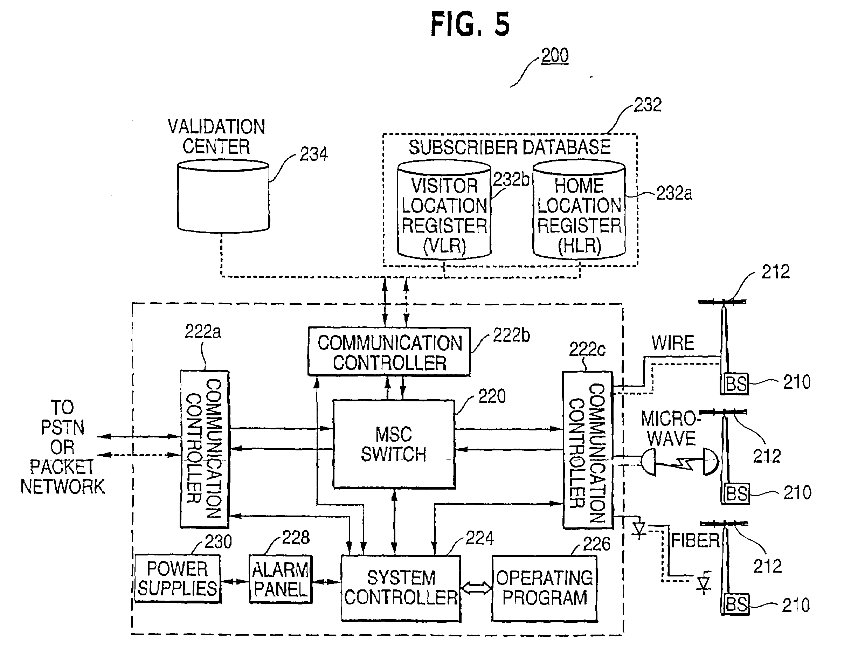

FIG. 5 illustrates a block diagram of an example mobile switching center (MSC) 200 of a mobile network shown in FIG. 4. The mobile switching center (MSC) 200 may be used to process requests for service between the update travel information service provider 100 and the designated traveler. The mobile switching center (MSC) 200 may also route calls between the base stations 212 and either a public switched telephone network (PSTN) or a packet network. As shown in FIG. 5, the mobile switching center (MSC) 200 may contain a switching assembly 220, communication controllers 222a-222c, a system controller 224, an operating program 226, an alarm panel 228, power supplies 230. The controllers 222a-222c and 224 coordinate base stations (BS) 220, switching functions, PSTN or packet network inter-connections, and communication links with base stations (BS) 210. In particular, the system controller 224 is used to create and interpret commands between the MSC 200 and the base stations (BS) 210, control the MSC switch 220, validate travelers (customers) requesting access, create air time and billing records, and monitor for equipment failures. The communication controllers 222a-222c are used to process voice and data information between the MSC 200, base stations 210, and either the PSTN or packet network. The MSC switch 220 may use time slot interchange (TSI) technology to provide connections between the base stations channels and the PSTN or packet network channels through the use of temporary memory locations. Communication links for carrying voice and data information between the MSC 200 and the base stations (BS) 210 may be established by wire, microwave, or fiber optics connections to transfer information.

Subscriber database 232 may be used to store and process customer subscriber lists, hold temporary customer information, and store and forward messages. Such subscriber database 232 may be included in the MSC 200, and may contain a home location register (HLR) 232a for storing detailed subscriber service subscription information and a visitor location register (VLR) 232b for temporary storing information about active subscribers that operate within the control of the particular MSC 200. HLR database 232a may store information about the present location of subscribers who are presently visiting the service area of another MSC 200, and may indicate whether they have arranged to receive calls there. VLR database 232b may contain a copy of the customer's HLR information to allow regular service while roaming in different sites. A validation center 234 may be used to process information required to authenticate a mobile unit 214. For example, during authentication, the validation center 234 may process information from the mobile unit 214 and compare the same to previously stored authentication information.

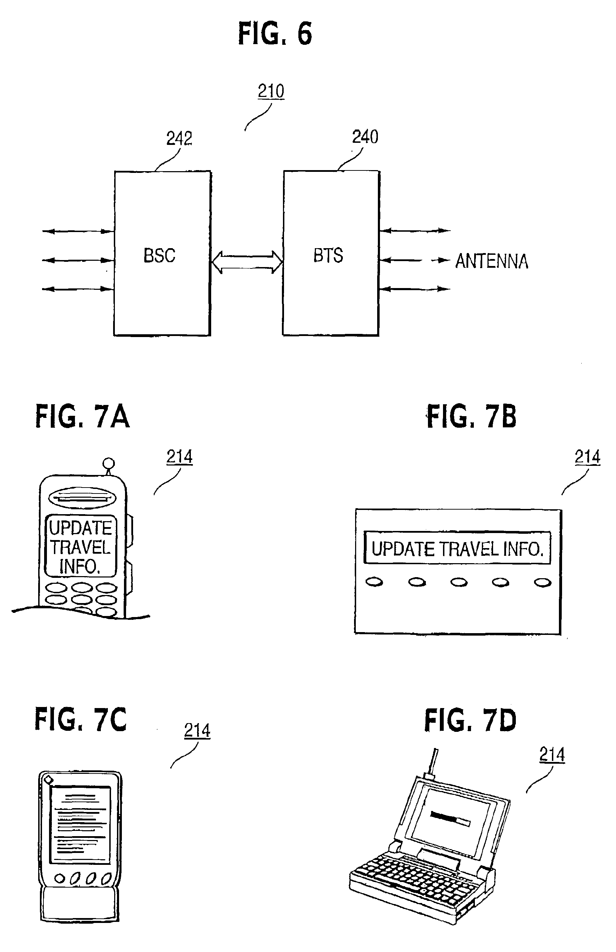

FIG. 6 illustrates a block diagram of an example base station (BS) of a mobile network shown in FIG. 4. The base station (BS) 210 may contain two main subsystems: the base transceiver station (BTS) 240 and the base station controller (BSC) 242. The BTS 240 typically comprises several base radio transceivers each consisting of a transmitter and a receiver which has a duplicated "front end" to match up with receiving antennas of an antenna assembly 212. The BSC 242 comprises a control computer (typically a microprocessor central processing unit with memory) for controlling one or more BTS 240, data communication facilities, and multiplexing and de-multiplexing equipments for controlling the radio communication links with the MSC 200, including sending information on the control channel, radio channel assignment and monitoring for link continuity during communications.

The mobile units 214 used to inform the designated traveler within the service area may be a mobile phone as shown in FIG. 7A, a remote paging device as shown in FIG. 7B, a wireless personal digital assistant (PDA) as shown in FIG. 7C, or a mobile data station (laptop computer) as shown in FIG. 7D. For purposes of simplicity, the mobile units 214 described hereinbelow will be a mobile phone having advanced features such as, for example, full-graphics display capabilities, network selections, wireless application protocol communications, and data transmission and reception. An example of such mobile phone may be Nokia® 7110 and Nokia® 8800 series mobile phones both of which support analog, digital cellular and PCS networks.

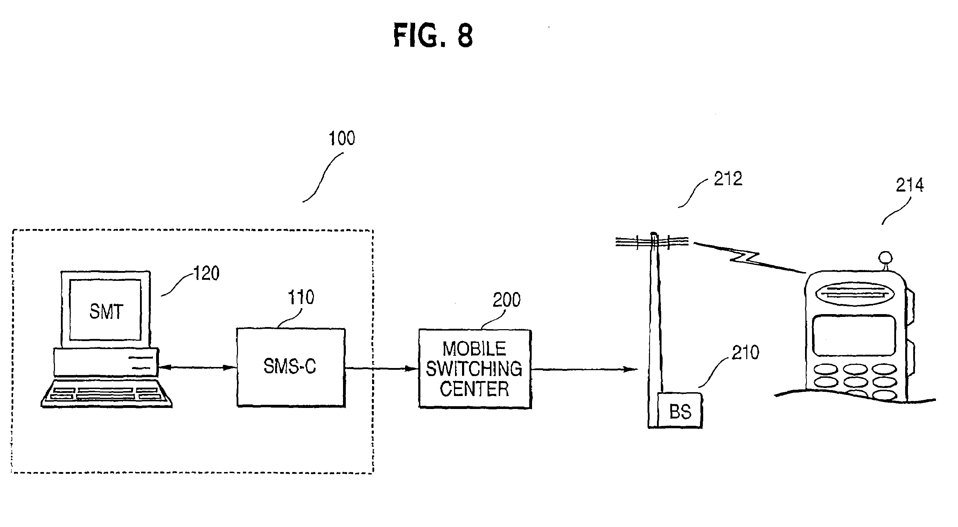

Refer back to FIG. 4, the update information service provider 100 may be implemented to provide special telecommunications services, such as, for example, short message service (SMS) or different types of data services including circuit switched data service and packet switched data service to the MSC 200 for wireless communications with the designated traveler over a GSM mobile network of MSC 200, base stations (BS) 210 and mobile units (MU) 214. For example, the update information service provider 100 may be implemented to provide short message service (SMS) of updates of the travel itinerary as shown in FIG. 8. A short message service center (SMS-C) 110 and a short message terminal (SMT) 120 connected to the SMS-C 110 by a data communication line are used for transporting short messages in digital form indicating update information of the travel itinerary of a designated traveler on either a continuous or periodic basis. The SMT 120 may be electronically linked to a local airport authority and/or a travel planner terminal 12 of the travel planner system 10 as shown in FIG. 1 so as to receive update information of the travel itinerary for transmission to the designated traveler through the mobile network. Alternatively, the SMT 120 may receive such update information of the travel itinerary directly from a variety of input devices and serve as a Web server or a WAP (Wireless Application Protocol) server for transmission to the designated traveler through the mobile network. In either situation, the designated traveler must be subscribed to the update information service provider 100 and the mobile phone number must be registered at the home location register (HLR) located at the MSC 200 in order to receive update information of the travel itinerary.

Short message service (SMS) provides mobile phone subscribers the ability to send and receive text messages, each up to 160 alphanumeric characters long (coded in 7-bit ASCII or ISO-5 character codes), over the signaling channels to or from mobile units 214. If a mobile unit (MU) 214 for which a short message is intended is not in service, or has left the coverage area, the message is stored in the SMS-C 110. The SMS-C 110 then forwards the message to the mobile unit (MU) 214 when the mobile unit (MU) 214 returns to service or re-enters the coverage area. The SMS can also transfer short messages between a SMT 120 in a data network and the mobile unit (MU) 214.

In the GSM mobile network, a short message is transported from the MSC 200 to the receiving SMS-C 110 using, for example, the standard network interface signaling GSM Mobile Application Part (MAP) protocol. Messages can be mobile originated short message service (MOSMS) from the system or mobile terminated short message service (MTSMS). A mobile originated short message such as update request is submitted from a mobile unit (MU) 214 via a base station (BS) 210 to the visited MSC 200. The visited MSC 200 forwards the message to the SMS-C 110 given by the originating mobile unit (MU) 214. The SMS-C 110 forwards the message to its destination which can be a mobile unit 214 or a SMT 120 in the data network. In contrast, a mobile terminated short message indicating update information of the travel itinerary is submitted by a user (e.g., designated traveler) directly to the SMS-C 110. An example of the mobile terminated short message may be "You Have An Update Of Your Travel Itinerary." The SMS-C 110 interrogates the related HLR for transporting information, and forwards the message to the MSC 200. The destination mobile unit (MU) 214 is paged and a connection is set up between the MSC 200 and the mobile unit 214. Upon set up, the MSC 200 forwards the message to the mobile unit 214 via the signaling channel. If the message was delivered successfully, a notification report is sent from the MSC 200 to the originating SCS-C 110. If the message was not delivered successfully, the HLR of the MSC 200 is so informed and a failure report is sent from the MSC 200 to the originating SMS-C 110. The notification report or failure report can be sent to the message originator by the SMS-C 110.

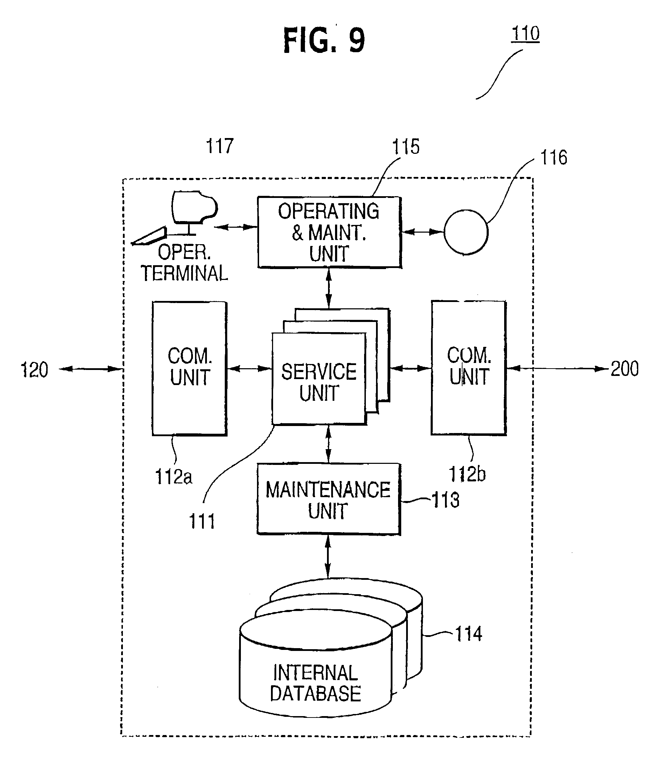

FIG. 9 illustrates a functional block diagram of an example short message service center (SMS-C) for providing updates of the travel itinerary through a mobile network shown in FIG. 4. The SMS-C 110 may contain a service unit 111, communication units 112a-112b, a maintenance unit 113, an internal database 114, an operating and maintenance unit 115, an invoicing unit 116 and an operating terminal 117. Communication unit 112a communicates for instance via an optional mobile network or data network with short message terminal SMT 120. Communication unit 112b communicates with the MSC 200. Typically, the SMS-C 110 is either directly integrated in the MSC 200, or has a X25-based connection (X.25 standard for communications with a packet data switching network) with the local MSC 200. The service unit 111 consists of the "store-and-forward" transmission of short messages. The maintenance unit 113 provides maintenance of the internal database 114 of the SCS-C 110. The operating and maintenance unit 115 provides operation and maintenance of the entire service station, through which the activity of the station can be managed from the operator terminal 117 and which provides print-outs of different reports on the operation of the station, for instance for an invoicing unit 116.

The SMS update message indicating update information of the travel itinerary may be sent to the subscriber (traveler) under the following situations: (1) upon initial power-on registration of the subscriber's mobile unit (MU) 214; or (2) when a subscriber requests to review update information of the travel itinerary by entering a feature code through his/her mobile unit (MU) 214.

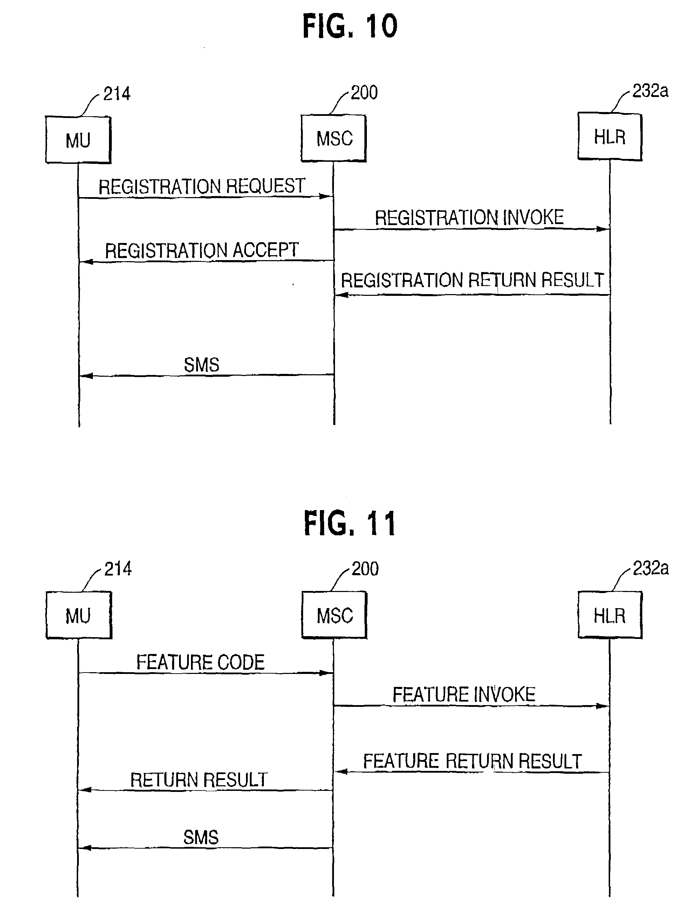

FIG. 10 illustrates an example short message flow diagram between a mobile unit (MU) 214, a mobile switching center (MSC) 200 and a home location register (HLR) 232a of a subscriber database 232 upon initial registration of the subscriber. When the mobile unit (MU) 214 of a subscriber (traveler) is first turned on, a registration request message is transmitted to the MSC 200 covering the service area. The registration request message includes an identification of the mobile unit (MU) 214. The MSC 200 sends a registration invoke message to an associated HLR 232a to ascertain the status of the subscriber associated with the mobile unit (MU) 214 requesting registration. The HLR 232a notifies the MSC 200 whether the subscriber is an authorized user, and if authorized, the MSC 200 returns a registration accept message to the mobile unit 214. Thereafter, the MSC 200 sends a short message service (SMS) indicating update information of the travel itinerary to the mobile unit 214. The SMS may include call transfer service status information which is then displayed on the mobile unit's visual display for the subscriber.

FIG. 11 illustrates an example short message flow diagram between a mobile unit (MU) 214, a mobile switching center (MSC) 200, and a home location register (HLR) 232a of a subscriber database 232 when a subscriber enters a feature code requesting the short message service (SMS). Initially, a subscriber enters a feature code requesting the SMS at the mobile unit (MU) 214. The feature code is transmitted to the MSC 200. The MSC 200 responds by sending a feature invoke message to the associated HLR 232a requesting that the subscriber feature be returned. The HLR 232a responds by returning to the MSC 200 a feature return result message to which the HLR 232a has appended the requested subscriber information. The MSC 200 then sends a return result message to the mobile unit (MU) 214, and follows this with a SMS message. Again, the SMS message may contain call transfer service status information which is then displayed on the mobile unit's visual display for the subscriber.

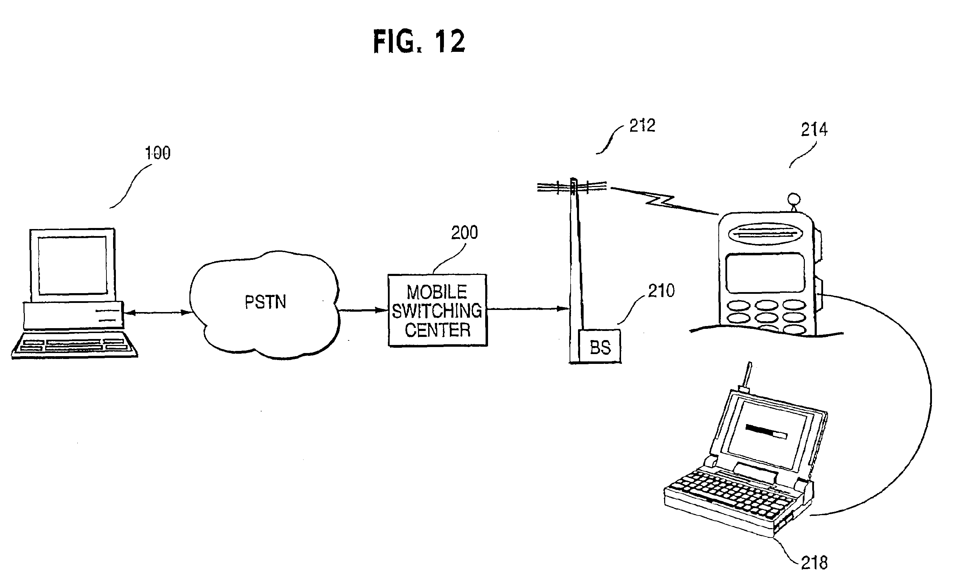

FIG. 12 illustrates another example implementation of an update travel information service provider for providing updates of the travel itinerary through a mobile network shown in FIG. 4 in terms of data services of either circuit switched data service or packet switched data service. Circuit switched data service may be used to provide for continuous data signals, whereas packet switched data may be used to allow for very short message. This is because circuit switched data has substantial connection time and is not efficient for serving sensing control and applications that require small amounts of information. High-speed circuit switched data service (HSCSD) may be used for transporting data up to 57.6 kb/s. Packet switched data may be available for greater data transfer speeds exceeding 100 kb/s without long connection set-up delays for applications such as Internet browsing, wireless email, route guidance, credit card processing and many other applications that require small amounts of data when communicating. When data compression is used, user data transfer speeds may exceed 400 kb/s.

As shown in FIG. 12, the update travel information service provider 100 may be implemented to provide data services such as circuit switched data or packet switched data of updates of the travel itinerary of a designated traveler over a mobile network shown in FIG. 4. Similar to the "short message service (SMS)" implementation of FIG. 8, the update travel information service provider 100 may be electronically linked to a local airport authority and/or a travel planner terminal 12 of the travel planner system 10 shown in FIG. 1 so as to receive update information of the travel itinerary for transmission to the designated traveler through the mobile network. Alternatively, the update travel information service provider 100 may receive such update information of the travel itinerary directly from a variety of input devices, and may serve as a Web server or a WAP (Wireless Application Protocol) server for transmission to the designated traveler through the mobile network. In either situation, the designated traveler must also be subscribed to the update information service provider 100 and the mobile phone number must be registered at the home location register (HLR) 232a located at the MSC 200 in order to receive update information of the travel itinerary.

When the designated traveler desires to request for update information of the travel itinerary from the update travel information service provider 100 connected to the MSC 200 through either a public switched telephone network (PSTN) or a data network, the mobile unit (MU) 214 calls the MSC 200 via the base station (BS) 210 indicating that it wishes to place a data call. When the MSC 200 accepts the data call and the mobile unit (MU) 214 begins to send data directly on the radio channel. The MSC 200 routes this data to a modem (not shown) for conversion into a modem signal to be sent to the update travel information service provider 100 through either the PSTN or the data network. The MSC 200 uses the phone number sent by the mobile unit (MU) 214 to dial the update travel information service provider 100. After the update travel information service provider 100 answers the data call, the update information of the travel itinerary can be exchanged between the update travel information service provider 100 and the designated traveler via the mobile unit (MU) 214. Optionally, a laptop computer 218 may be used in conjunction with the mobile unit (MU) 214 to send data to the update travel information service provider 100.

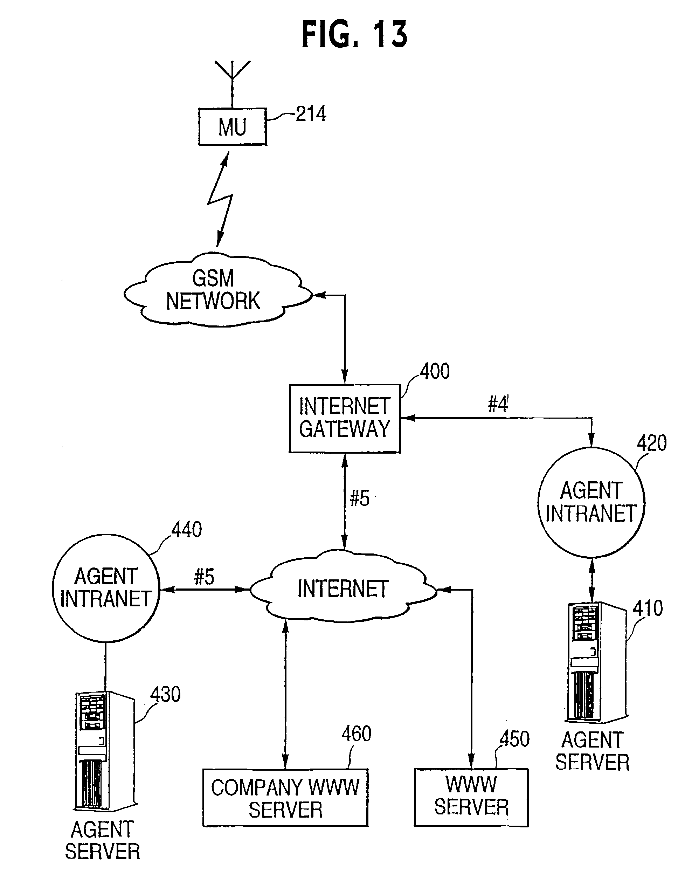

Refer now to FIG. 13, where another example communication network for providing updates of the travel itinerary according to the principles of the present invention is illustrated. As shown in FIG. 13, the mobile unit (MU) 214 of a designated subscriber may belong to a predetermined group within an entity that has predetermined preferences for travel conditions. The travel agent is an agent providing services relating to the travel information (e.g., travel itinerary) who has electronic accesses (links) to overall travel information. Similarly, the update travel information service provider may be implemented as an on-line travel information system (e.g., WWW server 450) for example, that is electronically linked to collect information such as delays or cancellation of flight schedules from a local airport authority and/or computer reservation systems for airline flights in order to handle and process requests to change the travel itinerary such as flight plans from a designated traveler and provide updates of such a travel itinerary such as updates from transfer providers such as airliners regarding flight schedules to the designated traveler, via the GSM network.

In one embodiment of the present invention, a travel agent server 410 and an agent Intranet 420 may be positioned at network architecture level to WAP (Wireless Application Protocol) server before the Internet. The WAP server may be within the same Intranet 420 as the travel agent server. This embodiment enables a travel agency to operate its own independent WAP server. In another embodiment of the present invention, a travel agent server 430 and an agent Intranet 440 may be positioned at network architecture level in the Internet. The WAP server may be positioned before the Internet for enabling access to the Internet from the mobile unit (MU) 214. This embodiment enables connections between the operators, such as mobile and fixed telecommunication companies, WAP service providers, and the travel agents.

As described from the foregoing, the present invention advantageously provides a computerized travel planner system which allows an individual traveler to book travel reservations, obtain a travel itinerary, and/or to timely, efficiently and effectively obtain update travel information of such travel itinerary over a mobile network such as a GSM network providing either short message service (SMS) or data services including circuit switched data and packet switched data services.

While there have been illustrated and described what are considered to be preferred embodiments of the present invention, it will be understood by those skilled in the art that various changes and modifications may be made, and equivalents may be substituted for elements thereof without departing from the true scope of the present invention. For example, other types of telephone and data mobile networks, and communication services may be used in lieu of the Public Land Mobile Network (PLMN) using one or more short message service (SMS), circuit switched data service and packet switched data service, so long as the update information of the travel itinerary is conveniently provided to the traveler. Although the GSM cellular radio system is a preferred implementation of an exemplary embodiment, the present invention is not limited thereto. Other cellular networks such as, for example, Code Division Multiplex Access (CDMA) system, DCS 1800, Personal Communication Network (PCN), Universal Mobile Communication (UMC), Universal Mobile Telecommunication System (UMTS), or future Public Land Telecommunication System (FPLMTS), and General Packet Radio Service (GPRS) may also be utilized. In addition, various embodiments of the invention may generally be useful for any wireless communication networks having, or hereafter developed to have, server access over wireless networks such as, for example, wireless LAN terminals. Further, many modifications may be made to adapt a particular situation to the teachings of the present invention without departing from the central scope of the present invention. Therefore, it is intended that the present invention not be limited to the particular embodiment disclosed, but that the present invention includes all embodiments falling within the scope of the appended claims.

## Claims

1. A travel information system (10) for providing a travel plan for travelers, **characterised** in that the system comprises:
a travel information service provider (12, 100) electronically linked to process requests from a designated subscriber (18) over a communication network to change information of a travel plan and to provide update information of said travel plan of said designated subscriber over said communication network; and
a mobile unit (16A-16N, 214) electronically linked to said communication network to receive said update information of the travel plan of said designated subscriber over said communication network.

2. The travel information system as claimed in claim 1, **characterised** in that said information of said travel plan includes flight plans, and said update information of said travel plan includes updates from airlines regarding flight schedules.

3. The travel information system as claimed in claim 1, **characterised** in that said travel information service provider (12, 100) is an on-line system electronically linked to collect information pertaining to delays or cancellation of flight schedules from a local airport authority and/or computer reservation systems so as to handle and process requests to change the travel plan from said designated subscriber (18) and provide update information of said travel plan to said designated subscriber, via said communication network.

4. The travel information system as claimed in claim 1, **characterised** in that said communication network is a public land mobile network (PLMN) comprising:
a mobile switching center (200) which processes requests for service between said update travel information service provider and said designated subscriber; and
a plurality of base stations (210) located in different coverage areas of different sites which receive through respective antennas (212) said update information of the travel plan of said designated subscriber from said mobile switching center (200) to said mobile unit (214) located within the coverage area of the respective site.

5. The travel information system as claimed in claim 4, **characterised** in that said mobile switching center (200) comprises:
a plurality of controllers (222a-222c) which coordinate operations of the base stations, switching functions, network inter-connections, and communication links with the base stations;
a switching assembly (220) which uses time slot interchange technology to provide connections between base stations channels and network channels through the use of temporary memory locations;
communication links which support transportation of said update information of the travel plan between the update travel information service provider and the base stations; and
subscriber database (232) including a home location register (HLR) which stores and processes subscriber lists, holds temporary subscriber information, and stores and forwards said update information of the travel plan.

6. The travel information system as claimed in claim 5, **characterised** in that said mobile unit (16A-16N, 214) corresponds to one of a mobile phone, a remote paging device, a wireless personal digital assistant (PDA), and a mobile computer station.

7. The travel information system as claimed in claim 6, **characterised** in that said travel information service provider (12, 100) is implemented with short message service (SMS, 110) to provide update information of the travel plan of said designated subscriber over said communication network.

8. The travel information system as claimed in claim 7, **characterised** in that said travel information service provider (12, 100) comprises:
a short message service center (110) electronically linked to receive short messages in digital form indicating update information of the travel plan of said designated subscriber; and
a short message terminal (214) connected to the short message service center (110) by a data communication line to transport said short messages in digital form indicating update information of the travel plan of said designated subscriber over said communication network.

9. The travel information system as claimed in claim 8, **characterised** in that said short message service center (110) comprises:
a service unit (111) which provides said short message service;
a plurality of communication units (112a-112b) which communicate via a data network with the short message terminal and the mobile switching center; and
an operating and maintenance unit (115) which provides operation and maintenance of the entire service center (110).

10. The travel information system as claimed in claim 7, **characterised** in that said designated subscriber (18) is provided with said update information of the travel plan upon initial power-on registration of the mobile unit (16A-16N, 214), or when said designated subscriber requests to review said update information of the travel plan by entering a designated code through the mobile unit.

11. The travel information system as claimed in claim 7, **characterised** in that said designated subscriber is provided with said update information of the travel plan by:
automatically requesting a request for said update information of the travel plan upon initial power-on registration of the mobile unit;
determining whether said designated subscriber is authorized for short message service from said home location register of said subscriber database;
when said designated subscriber is authorized for short message service (SMS), transmitting said short message service (SMS) message indicating said update information of the travel plan from said mobile switching center to said mobile unit; and
relaying said short message service (SMS) message indicating said update information of the travel plan to said designated subscriber.

12. The travel information system as claimed in claim 7, **characterised** in that said designated subscriber is provided with said update information of the travel plan by:
automatically requesting a request for said update information of the travel plan when said designated subscriber requests to review said update information of the travel plan by entering a designated code through the mobile unit;
determining whether said designated subscriber is authorized for short message service from said home location register of said subscriber database;
when said designated subscriber is authorized for short message service (SMS), transmitting said short message service (SMS) message indicating said update information of the travel plan from said mobile switching center to said mobile unit; and
relaying said short message service (SMS) message indicating said update information of the travel plan to said designated subscriber.

13. The travel information system as claimed in claim 11 or 12, **characterised** in that said mobile unit (16A-16N, 214) includes a visual display for providing a visual display of said short message service (SMS) message indicating said update information of the travel plan.

14. The travel information system as claimed in claim 6, **characterised** in that said travel information service provider (12, 100) is implemented with either circuit switched data service or packet switched data service to provide update information of the travel plan of said designated subscriber over said communication network.

15. The travel information system as claimed in claim 1, **characterised** in that said designated subscriber belongs to a predetermined group within an entity that has predetermined preferences for travel conditions.

16. The travel information system as claimed in claim 1, **characterised** in that said travel information service provider (12, 100) is an on-line system electronically linked to an Internet Service Provider (ISP) for providing travel information service to said designated subscriber over the Internet.

17. The travel information system as claimed in claim 1, **characterised** in that the travel information service provider (12, 100) is arranged to provide updates from transfer providers regarding the travel information of said designated subscriber (18) over said communication network; and
the mobile unit (16A-16N, 214) is arranged to receive said updates from the transfer providers regarding the travel information over said communication network.

18. The travel information system as claimed in claim 17, **characterised** in that said mobile unit (16A-16N, 214) corresponds to a cell phone for obtaining updates from the transfer providers regarding the travel information to said designated subscriber (18), via said communication network.

19. The travel information system as claimed in claim 17, **characterised** in that said transfer providers comprise a plurality of airliners each having individuals and interconnected flight schedules.

20. The travel information system as claimed in claim 17, **characterised** in that said travel information comprises transfer schedules and/or transfer routes of at least one of said transfer providers.
